# EUROPEAN PATENT APPLICATION

(11) **EP 1 168 721 A1**
(43) Date of publication of application: **02.01.2002**
(21) Application number: 00985956.2
(22) Date of filing: 27.12.2000
(51) Int. Cl.: H04L 12/56, H04L 29/08

(54) **PACKET COMMUNICATION APPARATUS, PACKET COMMUNICATION METHOD, AND STORAGE MEDIUM**

(30) Priority: 28.12.1999 JP 37568299
(71) Applicant: Kabushiki Kaisha Toshiba, Tokyo 105-8001 (JP)
(72) Inventor: SATO, Jun, Fuchu-shi, Tokyo 183-0043 (JP)
(74) Representative: HOFFMANN - EITLE
(86) International application number: JP0009330
(87) International publication number: WO0148980

(57) **Abstract**

In a communication apparatus 2 in a packet transfer communication system, packets are received at a packet transmitting/receiving section 23 and the received packets are subjected to a depacketing process at a packet reassembler circuit 24. The sequence numbers of the packets likely to be received are stored in a list 27. On the basis of the data subjected to the depacketing process, the value Sc in the sequence number field of the RTP header, and the list 27, an order rearranging section 28 rearranges the packets in the order of sequence numbers in which the packets are rearranged in the order in which they were transmitted. The data in the rearranged packets is stored in a reception buffer 25. Even when the order of arrival of packets have been changed, the data can be composed without losing the real-time response feature and further the quality of communication can be improved.

## Description

### Technical Field

This invention relates to a packet transfer communication apparatus, a packet transfer communication method, and a storing medium, and more particularly to a packet transfer communication apparatus, a packet transfer communication method, and a storage medium which transferring audio data, video data, and the like using a packet switching network.

### Background Art

Real-Time Transport Protocol (hereinafter, referred to as RTP) have been determined as communication protocols used to transfer data which real-time response is important, such as audio data and video data, through a packet switching network, such as the Internet.

As underlying protocols of RTP, that is, protocols in the transport layer, there are User Datagram Protocol (hereinafter, referred to as UDP) and Internet Protocol (hereinafter, referred to as IP).

UDP and IP are connectionless communication protocols where no logical setting is done between peer-to-peer. Since they are best-effort-type protocols that do not guarantee the communication transmission, when the network is crowded, they are considered to be unreliable. That is, neither UDP nor IP is considered to have the function of securing the reliability of communication.

Since the packets transmitted according to RTP from the packet transfer communication apparatus on the transmission side are communicated using the aforementioned UDP and IP, a problem arises: the order of delivery of packets sequentially transmitted over the packet switching network might change or some packets might be lost while these are transmitted. For instance, when packet switching networks are connected with some routers, each packet sequentially transmitted takes a different packet transmission path. When they are received by the packet transfer communication apparatus on the reception side, the order of delivery of packets might change or some packets might be lost during transmission over the packet switching networks.

RTP has been defined by Internet Engineering Task Force and the RTP packet format and Real-Time Control Protocol (hereinafter, referred to as RTCP) are specified in the RTP specification. An RTP packet is composed of an RTP header and an RTP payload. The RTP header is made up of fields, including a sequence number field, a time stamp field, a payload type field and so on. The RTP payload corresponds to a field for storing data whose real-time response is important, including audio and video data to be transmitted.

Normally, the packet transfer communication apparatus on the transmission side gives numerical values to the sequence number field of the RTP headers consecutively in the order in which the packets are to be transmitted, thereby transmitting the packets. The packet transfer communication apparatus on the reception side refers to the sequence number fields of the RTP headers of the received packets. If the sequence numbers are not consecutive, the apparatus judges that some packet is missing or the order of the packets have been changed.

Since a real-time response is regarded as important in the data transmitted in RTP as described above, the packets consecutively received are treated as valid data. The packets whose order was changed in transmission are judged to have been partially lost or changed in their order when the packet transfer communication apparatus on the reception side failed to receive the packets consecutively. Then, they are treated as invalid data and discarded.

For this reason, in a case where the packets have been transferred with their order changed, since the packet transfer communication apparatus on the reception side discard the data as invalid data in it, even though the data has arrived at the reception-side apparatus, the quality of communication might deteriorate seriously, although the real-time response feature is not deteriorating in composing the data.

As described above, in a case where the order of packets have been changed when the data whose real-time response is important, such as audio data and video data, has been transferred according to RTP through a packet switching network and received by the packet transfer communication apparatus on the reception side, the following problem arises: although the real-time response feature is not deteriorating in composing the data, the quality of communication deteriorates, because the data is discarded as invalid data, even though the data has reached the packet transfer communication apparatus on the reception side.

### Disclosure of Invention

The object of the present invention is to provide a packet transfer communication apparatus, a packet transfer communication method, and a storage medium which are capable of not only composing the data in real time even when the order of delivery of packets have been changed but also improving the quality of communication.

According to the present invention, there is provided a communication apparatus which is connected to a communication network and, via the communication network, communicates packets including sequence numbers and data to be transmitted, the packet transfer communication apparatus comprising:
reception means for receiving packets from the communication network;
extraction means for extracting the sequence numbers and the data to be transmitted from the packets received by the reception means, in such a manner that the sequence numbers are consecutive or discontinuous;
storage means for storing the sequence number of the packet until the packet whose sequence number lies between the discontinuous sequence numbers have been received, or during a specific period of time; and
rearrangement means for rearranging the received data including the data in the newly received packet and the data in the previously received packets on the basis of the sequence number of the new packet extracted by the extraction means and the sequence numbers stored in the storage means.

Furthermore, according to the present invention, there is provided a packet transfer communication method in a packet transfer communication apparatus which is connected to a communication network and, via the communication network, communicates packets including sequence numbers and data to be transmitted, the packet transfer communication method comprising:
the step of receiving packets from the communication network;
the step of extracting the sequence numbers and the data to be transmitted from the packets received in the receiving step, in such a manner that the sequence numbers are consecutive or discontinuous;
the step of storing the sequence number of the packet until the packet whose sequence number lies between the discontinuous sequence numbers have been received, or during a specific period of time; and
a rearrangement step of rearranging the received data including the data in the newly received packet and the data in the previously received packets on the basis of the sequence number of the new packet extracted in the extracting step and the sequence number stored in the storing step.

Still furthermore, according to the present invention, there is provided a storage medium which stores a program for operating a packet transfer communication apparatus or a computer connected to a communication network, the storage medium
causing the packet transfer communication apparatus or computer to receive packets from the communication network,
causing the data to be transmitted and the sequence numbers given to the packets in packet transmission to be extracted consecutively or discontinuously from the received packet,
causing the sequence number of the packet until the packet whose sequence number lies between the discontinuous sequence numbers have been received or during a specific period of time, and
storing a program for rearranging the received data including the data in the newly received packet and the data in the previously received packets on the basis of the sequence number of the newly extracted packet and the stored sequence numbers, in such a manner that the packet transfer communication apparatus or computer can read the program.

With the present invention, in the packet transfer communication apparatus on the reception side, the storage means stores the sequence numbers of the packets received within a specific period of time until the reception means has received a new packet. Then, after the reception means has received a new packet, the sequence number given to the packet in packet transmission and the data to be transmitted are extracted from the packet. On the basis of the sequence number of the extracted new packet and the sequence number in the storage means, the received data including the data in the packet just received is rearranged. This prevents the data from being lost even when the order of arrival of packets have been changed, which improves the quality of communication.

According to the present invention, there is provided a packet transfer communication apparatus, wherein the rearrangement means includes
means for comparing the sequence number extracted by the extraction means with the sequence numbers stored in the storage means and thereby judging whether the order in which the packets were received is correct or not,
means for, if the result of the comparison showed that the order in which the packets were received is incorrect, forming a list of the sequence numbers of the packets likely to be received in future, and
means for, when the reception means has received a new packet within a specific period of time, inserting new data having a sequence number in the list into a suitable position so that the new data may be arranged in the stream of the received data in the order of sequence numbers.

Therefore, the packet transfer communication apparatus on the reception side judges from the sequence number set in the received packet whether the order in which the packets were received and the order in which the transmission side transmitted the packets are correct or not and causes the timer to operate from this point in time until a specific time. If the order of packets on the transmission side differs from that on the reception side, a list of the sequence numbers expected to arrive and packets are waited for. Then, when a packet corresponding to a sequence number in the list is received within a specific period of time, the data is inserted into a suitable position in the data.

Furthermore, according to the present invention, there is provided a packet transfer communication apparatus comprising means for deleting the corresponding sequence number from the list after the specific period of time has elapsed.

Therefore, after a list of the sequence numbers of the packets expected to arrive is formed, the timer is operated. When the timer reaches time out after a specific time has elapsed, the corresponding sequence number is deleted from the list. As a result, the packet with the sequence number is treated as a missing packet, which makes it possible to compose the data without a further delay.

Specifically, with the present invention, even if the order of arrival of packets have been changed when the packet transfer communication apparatus on the reception side has received packets, the packet expected to arrive is awaited for a specific period of time. If the packet has arrived within the specific period of time, the packets are rearranged in the correct order of packets, which improves the quality of communication.

If the packet expected to arrive has not received within the specific period of time, the packet is treated as a missing packet as usual and the data is composed from the existing received data stream, which prevents the real-time response feature from being lost.

As a result, even when the order of arrival of packets have been changed, the data can be composed without losing the real-time feature and moreover the quality of communication can be improved.

### Brief Description of Drawings

FIG. 1 is a block diagram schematically showing a packet transfer communication system according to an embodiment of the present invention;
FIG. 2 schematically shows a packet structure complying with RTP in the system shown in FIG. 1;
FIG. 3 is a table showing an example of writing in a list of the packet transfer communication system of FIG. 1;

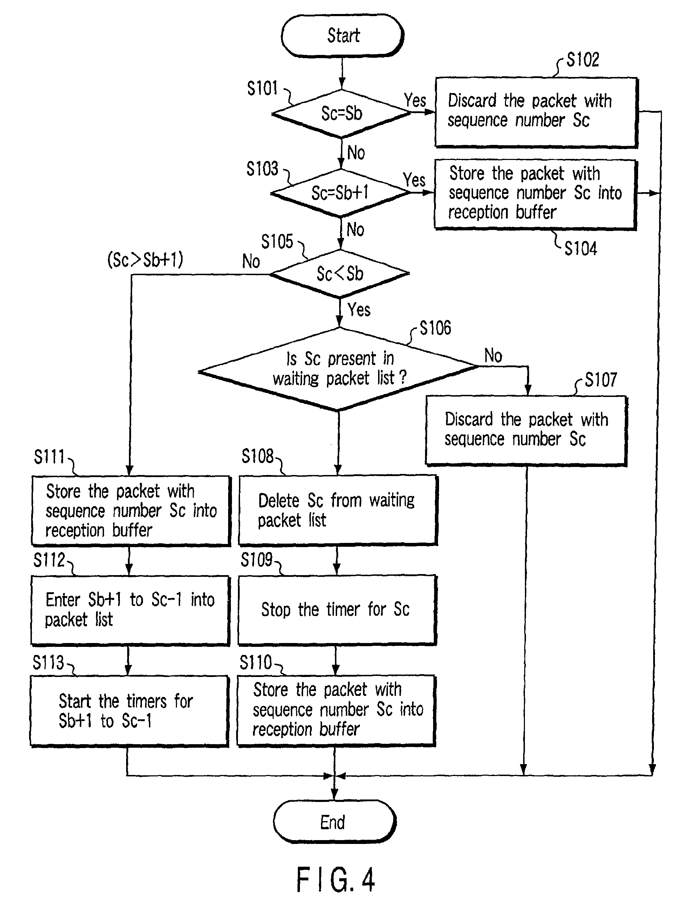

FIG. 4 is a flowchart for the process of changing the order of packets in the packet transfer communication system of FIG. 1; and
FIG. 5 is a flowchart for the processing done when the timer has reached time out in the packet transfer communication system of FIG. 1.

### Best Mode for Carrying Out of the Invention

Hereinafter, referring to the accompanying drawings, a packet transfer communication system according to an embodiment of the present invention will be explained in detail.

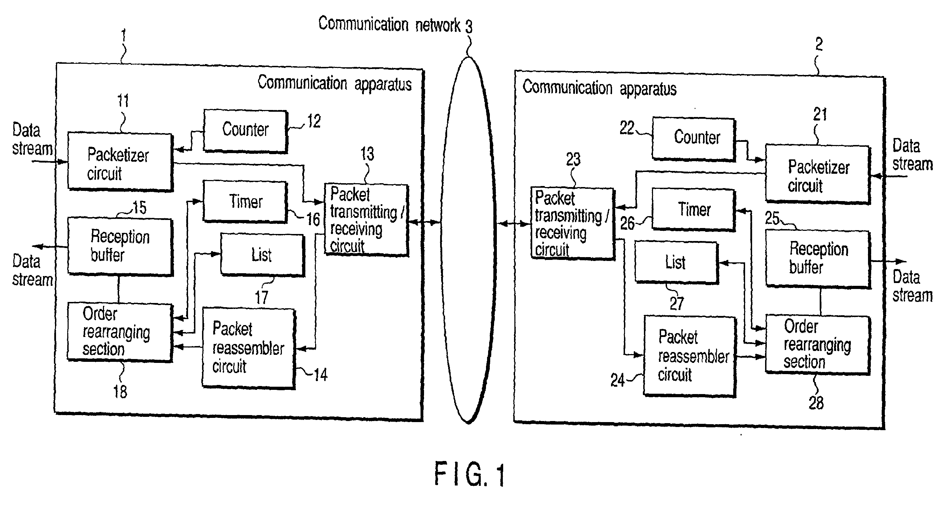

FIG. 1 shows a packet transfer communication system according to an embodiment of the present invention.

In FIG. 1, reference numerals 1 and 2 indicate communication apparatuses. The communication apparatus 1 and communication apparatus 2 are connected to each other via a communication network 3. The communication network 3 is, for example, a packet switching network, such as the Internet, and may be operated via cables or by radio.

The communication apparatus 1 comprises a packetizer circuit 11 for converting data streams into packets, a counter for giving sequence numbers to the packets, a packet transmitting/receiving section 13 for transmitting and receiving packets, a packet reassembler circuit 14 for depacketizing the received packets, a reception buffer 15 for holding temporarily the data extracted from the received packets, a timer 16, a reception-expected packet list 17 (hereinafter, referred to as the list 17) in which a list of the packets which have not been received yet at a certain time and will possibly be received after that time is written together with their writing time, and an order rearranging section 18 for changing the order of data supplied to the reception buffer 15.

The communication apparatus 2, which has the same circuit configuration as that of the communication apparatus 1, comprises a packetizer circuit 21, a counter 22, a packet transmitting/receiving section 23, a packet reassembler circuit 24, a reception buffer 25, a timer 26, a reception-expected packet list 27 (hereinafter, referred to as the list 27), and an order rearranging section 28.

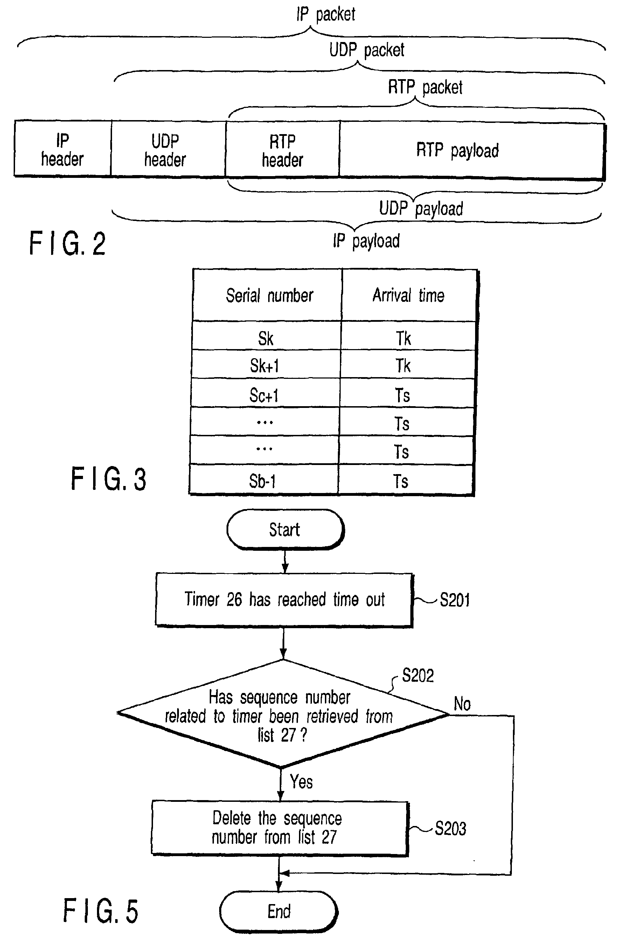

IP packets complying with RTP, which are transmitted and received over the communication network 3 between the communication apparatuses 1 and 2, for example, a packet switching network, have a structure as shown in FIG. 2. As shown in FIG. 2, an IP packet is composed of an IP payload 5 and an IP header 4 added to the head of the IP payload 5. The IP payload 5, a UDP packet, is made up of a UDP payload 7 and a UDP header 6 added to the head of the UDP payload 7. Furthermore, the UDP payload 7, an RTP packet, is composed of an RTP payload 9 and an RTP header 8 added to the head of the RTP payload 9. The RTP header 8 is made up of fields, including a sequence number field, a time stamp field, a payload type field and so on. The RTP payload 9 corresponds to a field for storing data whose real-time response is important, such as audio data and video data to be transmitted.

In the packet transfer communication system for transmitting and receiving packets of such a structure, data streams to be transmitted, that is, data whose real-time response is important, such as video and audio data to be transmitted, are supplied to the packetizer circuits 11, 21. In the packetizer circuits 11, 21, the data streams are stored in the RTP payload 9 and the RTP header 8 is added as the information necessary to the RTP payload, thereby converting the RTP payload into RTP packets as UDP payloads 7. The counters 12, 22 supply sequence numbers to the packetaizer circuits 11, 21. The packetizer circuits 11, 21 count up each time an RTP packet is created, thereby generating a new sequence number. RTP packets, UDP payloads, composed of the RTP header 8 and RTP payload 9 are supplied to the packet transmitting/receiving sections 13, 23. In the packet transmitting/receiving sections 13, 23, the UDP header 6 is added to an RTP packet, a UDP payload 7, thereby converting the RTP packet into a UDP packet, an IP payload 5. To the UDP packet, the IP payload 5, the IP header is further added, thereby converting the UDP packet into an IP packet. The packet transmitting/ receiving sections 13, 23 include a cable or radio communication interface or a cable and radio communication interface and transmit the IP packets created by the packetizer circuits 11, 21 to the communication network 3.

Furthermore, the packet transmitting/receiving sections 13, 23 receive IP packets from the communication network 3. In the packet transmitting/receiving sections 13, 23, the IP header 4, UDP header 6, and UDP payload 7, an RTP packet, are interpreted and cut out from the received packets. The UDP payload 7, an RTP packet, is supplied to the packet reassembler circuit 14. In the packet reassembler circuit 14, the UDP payload 7 is separated into the RTP payload 9 and RTP header 8. The data stream in the RTP payload 9 is supplied via the order rearranging section 18 to the reception buffers 15, 25.

The reception buffers 15, 25 include buffers that enable the data to be outputted from the reception side in the order in which the transmission side transmitted the data. In a subsequent process, to process the data with an application, the data is taken out of the reception buffer 25 in the form of data streams and outputted. If the application is, for example, an Internet telephone program, the audio data can be received in real time. If the application is a teleconference program, video streams and audio streams can be composed in real time, thereby realizing teleconferences.

When an RTP packet Sc is inputted, the order rearranging circuit 18 compares the sequence number of the sequence number of the RTP packet Sc with the sequence number of the RTP packet Sb inputted immediately before the input of the RTP packet Sc to the order rearranging circuit 18. If the sequence number of the RTP packet Sc follows the sequence number of the RTP packet Sb, the data in the RTP packet Sc is considered to follow the data in the RTP packet Sb and supplied to the reception buffer 15 in that order. If the sequence number of the RTP packet Sc is smaller than the sequence number of the RTP packet Sb (Sc < Sb), the RTP packet Sc is supplied to the reception buffers 15, 25 in such a manner that it is arranged before the RTP packet Sb. If the sequence number of the RTP packet Sc is bigger than the sequence number of the RTP packet Sb but does not follow the latter (Sc > Sb but Sc ≠ Sb + 1), it is considered that an RTP packet whose sequence number (Sb + 1 to Sc - 1) lies between the sequence number Sc of the RTP packet and the sequence number of the RTP packet Sb has not been received yet, the sequence numbers (Sb + 1 to Sc - 1) between them are written together with the writing time into the list 17. For instance, it is assumed that the sequence number of the RTP packet arrived earlier at the order rearranging circuit 18 is "11190" and the sequence number of the packet arrived later is "11200." In this case, it is considered that the packets whose sequence numbers ranging from "11191" to "11199" have not been received. Then, the sequence numbers ranging from "11191" to "11199" will possibly be received in future and written in the list.

In a case where the sequence number of the RTP packet Sc is smaller than the sequence number of the RTP packet (Sc < Sb), if it has been verified that the sequence number of the RTP packet Sc is in the list, the number is deleted from the list and put in the row following the RTP packet Sb. After the sequence number of the RTP packets are arranged in the reception buffers 15, 25 in a consecutive manner, the data in the RTP packets is supplied sequentially to the reception buffers 15, 25.

Hereinafter, in the packet transfer communication system, since the communication apparatus 1 and communication apparatus 2 have the same circuit configuration, a case where the data is transferred from the communication apparatus 1 to communication apparatus 2 will be explained as an example of the communicating operation to simplify the explanation given below. To do this, let the communication apparatus 1 be the transmission side and the communication apparatus 2 be the reception side.

On the transmission side, when the data stream to be transmitted is inputted, the data stream is transferred to the packetizer circuit 11.

In the packetizer circuit 11, the data stream is divided at suitable intervals to determine RTP payloads. RTP headers are added to the RTP payloads, thereby converting the data stream into packets. In this way, RTP packets are created. In the sequence number field of the RTP header, the value read from the counter 12 is stored as the sequence number. The counter 12 counts up each time an RTP packet is created at the packetizer circuit 11. The count value is outputted as the sequence number of the packet.

The RTP packet is sent to the packet transmitting/receiving section 13, which further adds a UDP header and an IP header, converting the RTP packet into an IP packet. The IP packet outputted from the packet transmitting/receiving section 13 is transmitted via the communication network 3 to the packet transmitting/receiving section 23 on the reception side, which receives the packet.

On the reception side, after the packet transmitting/receiving section 23 receives the IP packet, the IP packet is separated into the IP header, UDP header, and UDP payload. The UDP payload is sent to the packet reassembler circuit 24. In the packet reassembler circuit 24, the UDP payload is depacketed and separated into the RTP header and RTP payload. Then, the data is extracted from the RTP payload and the value Sc is extracted as a sequence number from the sequence number field of the RTP header. The data and the value Sc in the sequence number field of the RTP header extracted by the packet reassembler circuit 24 are transferred to the order rearranging section 28.

The operation in the order rearranging section 28 of the communication apparatus 2 will be explained by reference to FIG. 3. FIG. 3 is a flowchart showing the process in the order rearranging section which rearranges the packets in the order in which they were transmitted, when they have reached the communication apparatus 2 on the reception side in the packet transfer communication system.

As described above, in the communication apparatus 2 on the reception side, when a packet has reached the packet reassembler circuit 24 and the sequence number field of the RTP header has been recognized, the packet reassembler circuit 24 hands over the data and sequence number Sc to the order rearranging section 28. Then, the order rearranging section 28 refers to the handed-over sequence number Sc and the previously received sequence number Sb (the sequence number of the RTP packet previously arrived) and compares them (S101, S103 and S105). When the result of the comparison has shown that they are the same sequence number (Sc = Sb) (Y in S101), the order rearranging section 28 judges that the newly received RTP packet is a repeated RTP packet and deletes the data from the reception buffer 25, or discards the data (S102).

When the result of the comparison has shown that the sequence number Sc is the number (Sc = Sb + 1) following the reference sequence number Sb (Y at S103), the order rearranging section 28 regards the sequence number Sb and sequence number Sc as consecutive RTP packets and stores the data on the sequence number Sc in the area next to the area of the reception buffer 25 in which the sequence number Sb has been stored (S104). That is, the data on the sequence number Sc is stored in the area specified by the address following the address of the area in which sequence number Sb has been stored.

Furthermore, when the result of the comparison has shown that the sequence number Sc is smaller than the sequence number Sb (Sc < Sb) (Y at S105), the order rearranging section 28 searches the list 27 of waiting packets for the sequence number Sc (S106).

If the sequence number Sc is not in the list 27 of waiting packets (N at S106), the order rearranging section 28 discards the packet having the sequence number Sc (S107).

When hitting the sequence number Sc as a result of searching the list 27 (Y at S106), the order rearranging section 28 deletes the corresponding sequence number from the list 27 (S108), cancels (or stops) the counting operation of the timer 26 corresponding to the sequence number (S109), and inserts the data stream into a suitable storage area of the reception buffer 25 corresponding to the sequence number Sc (S110).

On the other hand, if the sequence number Sc is not smaller than the reference sequence number Sb in the comparing process at S105 (not Sc < Sb) (N at S105), that is, if the sequence number Sc is larger than the reference sequence number Sb (Sc > (Sc + 1)), the order rearranging section 28 not only stores the packet with the sequence number Sc into the reception buffer 25 (S111) but also adds the sequence numbers Sb + 1 to Sc - 1 to the waiting packet list 27 to wait for the RTP packets having the sequence numbers Sb + 1 to Sc - 1 (S112). Then, the section 28 starts the counting operation of the timer 26 for the sequence number of each waiting packet (S113). The timer 26 may be formed by software or hardware. It is assumed that as many timers as the apparatus permits are provided.

FIG. 3 is a flowchart showing the processing when the timer 26 has reached time out.

As shown in FIG. 3, when a certain period of time has elapsed since the order rearranging section 28 started the counting operation of the timer 26 and the time 26 has reached time out (S201), the order rearranging section 28 searches for the sequence number related to the timer 26 (S202).

When the sequence number has been found as a result of the search (Y at S202), the sequence number is deleted from the waiting list 27 (S203) and the packet is treated as a missing packet. Then, the order rearranging section 28 terminates the process.

Furthermore, when the sequence number has not been found as a result of the search (N at S202), the order rearranging section 28 terminates the process as it is.

It is assumed that the user can set arbitrarily the time required for the timer 26 to reach time out.

As described above, with the packet transfer communication system according to the embodiment, when an IP packet arrived at the communication apparatus 2 on the reception side and the sequence number field in the RTP header has been recognized, the packet reassembler circuit 24 hands over the data and sequence number Sc to the order rearranging section 28. The order rearranging section 28 compares the handed-over sequence number Sc with the sequence number Sb (the one previously arrived) already stored in the reception buffer 25. According to the result of the comparison, the received data and the data in the reception buffer 25 are rearranged. This makes it possible to compose the data without losing the real-time response feature and further improve the quality of communication, even when the order of arrival of IP packets have been changed.

Furthermore, when packets are received by the communication apparatus 2, the time required for the timer 26 to reach time out can be set arbitrarily. This makes it possible to rearrange the received packets in the order of transmission, while keeping the delay time necessary for the application.

That is, even when the order of arrival of packets have been changed, it is possible to rearrange the packets in the proper order of the packets without discarding packets, requesting retransmission, or losing the real-time response feature.

The present invention is not limited to the above embodiment.

In the embodiment, the communication apparatus 1 has transmitted packets and the communication apparatus 2 has received them. Since the communication apparatus 1 and the communication apparatus 2 have the same configuration, the latter may transmit packets and the former receive them.

While in the embodiment, each of the communication apparatuses 1, 2 has been composed of the packetizer circuit, counter, packet transmitting/receiving section, packer reassembler circuit, reception buffer, timer, and reception-expected packet list, these component parts may be realized in software.

The software may be stored onto a storage medium from which a computer or a portable communication terminal can read the data, such as a floppy disk or a flash memory. In this case, a computer or a portable communication terminal reads the software (programs) stored on a storage medium, thereby enabling the processes in each embodiment.

The storage medium may be not only a floppy disk or a flash memory but also a magnetic disk, a hard disk, an optical disk (such as CD-ROM, CD-R, or DVD), a magneto-optical disk (such as MO), or a semiconductor memory. That is, the storage medium may use any storing method, provided that it can store programs and enables a computer to read the data from it.

Furthermore, under the control of the program installed from a storage medium into the computer, the OS (operating system) or the MW (middleware), such as a database management application program or a network application program, running on the computer may execute part of each process for realizing the embodiment.

The storage medium is not restricted to a medium independent of the computer and may be a storage medium into which a program transmitted over a LAN or the Internet has been downloaded and stored or permanently stored.

Furthermore, the number of storage mediums is not limited to one. A plurality of storage mediums may be used in executing the processes in the embodiment. In this case, too, the storage mediums are included in the scope of storage medium in the present invention. Each medium may take any configuration.

The computer, which executes each process in the embodiment under the control of the program stored on the storage medium, may be composed of a single personal computer or a system made up of units connected to form a network.

In addition, the computer is not limited to a personal computer and may be an arithmetic operation unit or a microcomputer included in an information processing unit. The units and apparatuses capable of realizing the function of the present invention using programs are generically called the computer.

### Industrial Applicability

As described above, with the present invention, the storage means stores the sequence numbers of the packets received within a specific period of time until the reception means have received a new packet in the packet transfer communication apparatus on the reception side. When the reception means has received a new packet, the sequence number given to the packet in packet transmission and the data to be transmitted are extracted from the packet. On the basis of the sequence number of the extracted new packet and the sequence number in the storage means, the received data including the data in the just received packet are rearranged. Therefore, even when the order of arrival of packets have been changed, part of the data stream is prevented from being lost, which improves the quality of communication.

With the present invention, the packet transfer communication apparatus on the reception side judges from the sequence numbers set in the received packets whether the order in which the packets were received and the order in which the transmission side transmitted the packets are correct or not. When the order of the packets on the transmission side and that on the reception side are incorrect, a list of the sequence numbers expected to arrive is formed and the packets are waited for. Then, when a packet corresponding to a sequence number in the list is received within a specific period of time, the data is inserted in a suitable data position in the data.

Furthermore, with the present invention, since the corresponding sequence number is deleted from the list after a specific time has elapsed, the packet with the sequence number is treated as a missing packet, which enables the data to be composed without a further delay.

As a result, even when the order of arrival of packets have been changed, the data can be composed without losing the real-time response feature, and moreover, the quality of communication can be improved.

## Claims

1. A communication apparatus which is connected to a communication network and, via said communication network, communicates packets including sequence numbers and data to be transmitted, said packet transfer communication apparatus comprising:
reception means for receiving packets from said communication network;
extraction means for extracting the sequence numbers and the data to be transmitted from the packets received by said reception means, in such a manner that the sequence numbers are consecutive or discontinuous;
storage means for storing the sequence number of the packet until the packet whose sequence number lies between said discontinuous sequence numbers have been received, or during a specific period of time; and
rearrangement means for rearranging the received data including the data in the newly received packet and the data in the previously received packets on the basis of the sequence number of the new packet extracted by said extraction means and the sequence numbers stored in said storage means.

2. The packet transfer communication apparatus according to claim 1, wherein said storage means stores the missing sequence number between said discontinuous sequence numbers.

3. The packet transfer communication apparatus according to claim 1, wherein
said rearrangement means includes
means for comparing the sequence number extracted by said extraction means with the sequence numbers stored in said storage means and thereby judging whether the order in which the packets were received is correct or not,
means for, if the result of the comparison showed that the order in which the packets were received is incorrect, forming a list of the sequence numbers of the packets likely to be received in future, and
means for, when said reception means has received a new packet within a specific period of time, inserting new data having a sequence number in said list into a suitable position so that the new data may be arranged in the stream of the received data in the order of sequence numbers.

4. The packet transfer communication apparatus according to claim 3, further comprising means for deleting the corresponding sequence number from said list after said specific period of time has elapsed.

5. A packet transfer communication method in a packet transfer communication apparatus which is connected to a communication network and, via said communication network, communicates packets including sequence numbers and data to be transmitted, said packet transfer communication method comprising:
the step of receiving packets from said communication network;
the step of extracting the sequence numbers and the data to be transmitted from the packets received in the receiving step, in such a manner that the sequence numbers are consecutive or discontinuous;
the step of storing the sequence number of the packet until the packet whose sequence number lies between said discontinuous sequence numbers have been received, or during a specific period of time; and
a rearrangement step of rearranging the received data including the data in the newly received packet and the data in the previously received packets on the basis of the sequence number of the new packet extracted in said extracting step and the sequence number stored in said storing step.

6. The packet transfer communication method according to claim 5, wherein said storing step stores the missing sequence number between said discontinuous sequence numbers.

7. The packet transfer communication method according to claim 5, wherein
said rearrangement step includes
the step of comparing the sequence number extracted in said extracting step with the sequence numbers stored in said storing step and thereby judging whether the order in which the packets were received is correct or not,
the step of, if the result of the comparison showed that the order in which the packets were received is incorrect, forming a list of the sequence numbers of the packets likely to be received in future, and
the step of, when said receiving step has received a new packet within a specific period of time, inserting new data having a sequence number in said list into a suitable position so that the new data may be arranged in the stream of the received data in the order of sequence numbers.

8. The packet transfer communication method according to claim 7, further comprising the step of deleting the corresponding sequence number from said list after said specific period of time has elapsed.

9. A storage medium which stores a program for operating a packet transfer communication apparatus or a computer connected to a communication network, said storage medium
causing said packet transfer communication apparatus or computer to receive packets from said communication network,
causing the data to be transmitted and the sequence numbers given to the packets in packet transmission to be extracted consecutively or discontinuously from the received packet,
causing the sequence number of the packet until the packet whose sequence number lies between said discontinuous sequence numbers have been received or during a specific period of time, and
storing a program for rearranging the received data including the data in the newly received packet and the data in the previously received packets on the basis of the sequence number of the newly extracted packet and the stored sequence numbers, in such a manner that said packet transfer communication apparatus or computer can read the program.

10. The storage medium according to claim 9, wherein said program causes the missing sequence number between said discontinuous sequence numbers to be stored.

11. The storage medium according to claim 9, wherein
said rearrangement program
compares said extracted sequence number with the sequence numbers stored in said storing step and thereby judges whether the order in which the packets were received is correct or not, and
if the result of the comparison showed that the order in which the packets were received is incorrect, causes a list of the sequence numbers of the packets likely to be received in future to be formed, and
when a new packet has been received within a specific period of time, inserts new data having a sequence number in said list into a suitable position so that the new data may be arranged in the stream of the received data in the order of sequence numbers.

12. The storage medium according to claim 11, wherein said program causes the corresponding sequence number to be deleted from said list after said specific period of time has elapsed.
